# EUROPEAN PATENT APPLICATION

(11) **EP 1 227 453 A2**
(43) Date of publication of application: **31.07.2002**
(21) Application number: 02250061.5
(22) Date of filing: 07.01.2002
(51) Int. Cl.: G09B 5/00

(54) **Information presentation system**

(30) Priority: 05.01.2001 GB 0100279
(71) Applicant: RESEARCH MACHINES PLC, Milton, Abingdon, Oxon OX14 4SE (GB)
(72) Inventor: Powell, Myfanwy, Oxford, OX2 6QZ (GB); Owers, James Michael, Abingdon, Oxon, OX14 1XN (GB); Fitzgerald, Lyndon Arthur, Witney, Oxon, OX28 1PD (GB)
(74) Representative: Loveless, Ian Mark

(57) **Abstract**

A presentation system comprises a resource repository and a metadata repository. The metadata repository includes data designating the type of each resource and position of the resource in a predetermined sequence. A resource launcher is configured to extract the resource type and position in the sequence and present the selected resource on a screen. A user can interact with a simple user input such as a mouse click or button push to display either a preceding or subsequent resource in the sequence.

## Description

### FIELD OF THE INVENTION

The present invention relates to a presentation system and in particular to a system for launching and displaying various different media types.

### BACKGROUND OF THE INVENTION

To date, computers have been used in education in three ways. The first, to support the teaching process by enabling the teacher and/or student to access and use discrete resources, for example: to access the Internet, to compile and publish a document, to access a resource such as specific software to evaluate a student's ability. The second way has been to provide independent learning systems or remote computer assisted teaching systems that allow the student to learn in a one to one situation (i.e. themselves and the computer) on their own. Sometimes there is a teacher interaction, but this is done on a discrete and remote basis. It is the student themselves that is setting the pace and driving the system. The third way is predominantly used as a distance-learning tool where a teacher can put together a set of activities and distribute these to individual or group students.

With further developments in computing technology, there are a variety of ways of presenting material to students. These include documents, graphics, the Internet and video clips. However, these different ways of presenting content, whilst of assistance to a teacher, create an extra burden on teachers to plan lessons and adequately record data describing activities that have been undertaken to ensure that the students have been taught all the required subject matter.

### SUMMARY OF THE INVENTION

We have appreciated the need to provide a simple system to allow those presenting material on a screen, such as teachers, to use a variety of different media. In particular, we have appreciated difficulties faced by teachers in using different media in a seamless fashion.

In a broad aspect, the invention provides a system for seamlessly presenting different media types on a single teaching screen.

In particular, there is provided a presentation system comprising: a resource repository and a metadata repository, the metadata repository including data designating the type of each resource and the position of the resource in a predetermined sequence, the system further comprising a resource launcher configured to extract the resource type and position in the sequence, to present the selected resource on a screen and, on receipt of a simple user input, to select and display either the preceding or subsequent resource in the sequence.

The presentation system can be a teaching system in which the display is a large screen for displaying material to a group of students. The material can be a variety of different sources such as PowerPoint, word processing, HTML or any other type of data. The advantage of the system there is that a person presenting material can seamlessly switch from one type of application to another. Indeed, the presenter or teacher does not even need to be aware of the fact that the material originates from a variety of different sources. The material is all displayed in a single window. The presenter or teacher can sequentially move from one item to another by clicking a forward or next button. The resource material can be delivered over the World Wide Web, or stored locally on a server or hard disk in some other format.

The invention is defined in the claims to which reference is now directed.

### BRIEF DESCRIPTION OF THE FIGURES

An embodiment of the invention will now be described, by way of an example only, and with reference to the accompanying figures in which:
- Figure 1:: shows the breakdown of a curriculum;
- Figure 2:: shows the teaching and learning cycle adopted by the embodiment of the invention;
- Figure 3:: shows the key functional units of the embodiment;
- Figure 4:: shows the overall logical design of a database embodying the invention;
- Figure 5:: shows the main metadata elements stored in the database of Figure 4;
- Figure 6:: shows the creation of materials and metadata; and
- Figure 7:: shows media launching according to the invention.

### DETAILED DESCRIPTION OF A PREFERRED EMBODIMENT

The embodiment of the invention is a computer based teaching system that allows storage, manipulation and presentation of data in new ways to facilitate teaching. The system could be used for any subject matter and at any level. The preferred embodiment, though, is for use in schools in teaching numeracy. The system operates across the World Wide Web using known protocols, but can also use other network technology as well as locally stored data.

A teacher and students can view various media on a screen. The appearance of the screen is a sequence of hypertext pages that can be navigated using forward and back buttons. The appearance of such pages is well known to those in the art and need not be described further.

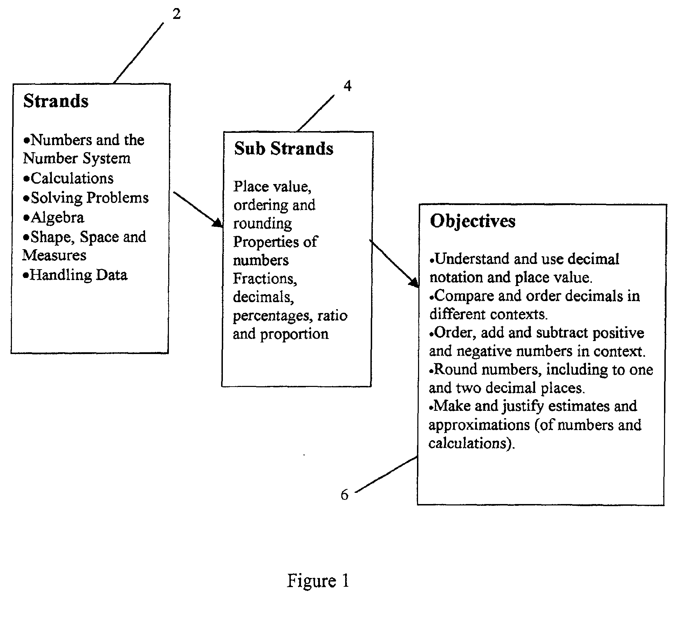

The teaching of numeracy is prescribed in the United Kingdom according to a fixed structure. An example of the structure is shown in Figure 1.

The teaching of numeracy is divided into six strands 2. Strands are a sub-division of the whole field of numeracy to be taught. In turn, strands 2 are divided into sub-strands 4 or topics that define the areas that must be covered in each strand. In turn, these are further sub-divided into objectives 6, which are specific learning points, defined in the United Kingdom national numeracy framework. The present embodiment scores data relating to these strands, topics, and objectives in addition to resource materials in such a way that they can be manipulated in accordance with the various inventive aspects.

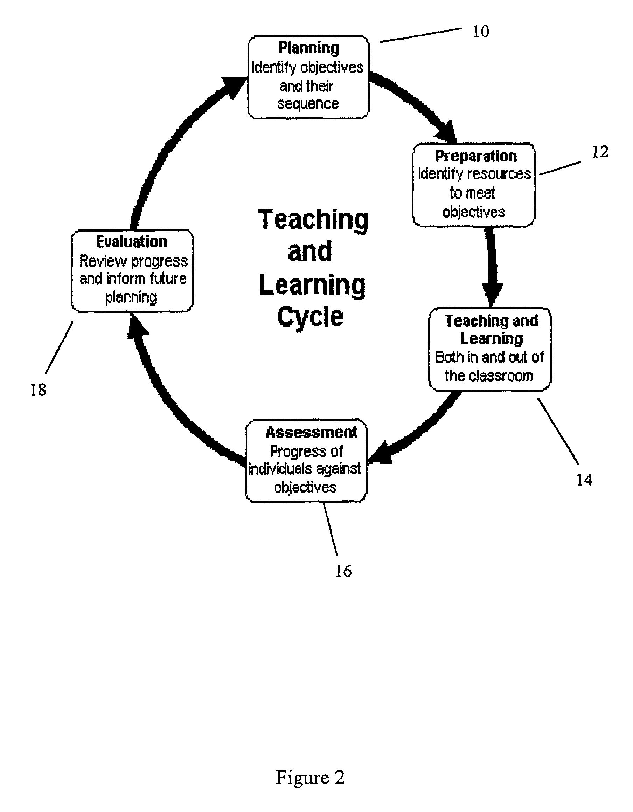

The model devised and adopted for the embodying system embodies the whole teaching and learning cycle as shown in Figure 2. The planning stage 10 involves identifying objectives and their sequence. The preparation stage 12 then allows identification of resources to meet objectives from the repository of resources to facilitate teaching 14 by display of resources on a screen. The system includes an assessment function 16 to allow the progress of individuals or groups to be monitored against the objectives and lastly, an evaluation function 18 to allow review of progress and inform future planning. The logical connection shown by the arrows are facilitated by the storage of data in the whole system.

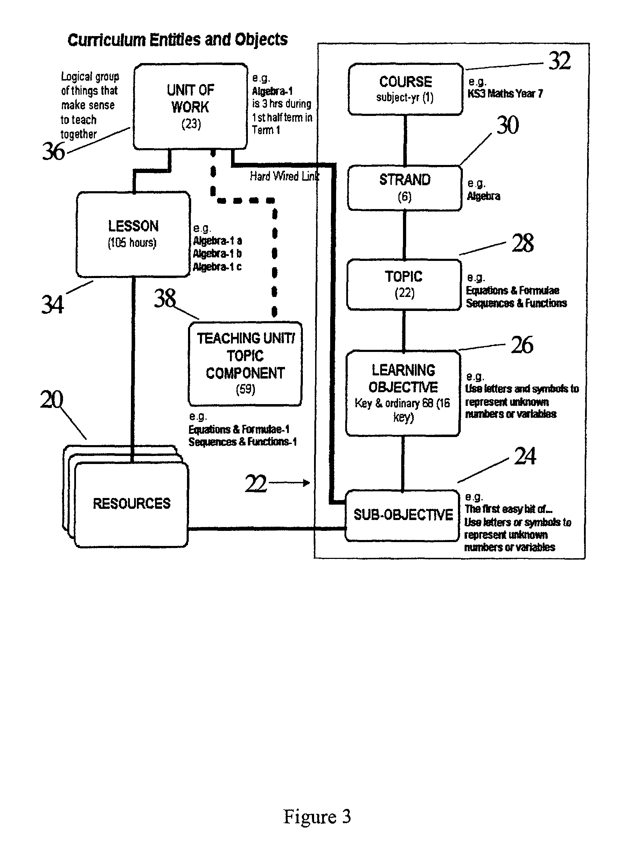

A broad overview of the data storage is shown in Figure 3. Resources are stored in a resource repository 20 that is logically linked to a metadata repository 22. Within the metadata repository information is stored on a course 32, strand 30, topic 28 and objective 26 as previously described. In addition, the embodiment includes the concept of a sub-objective 24 also stored in the metadata repository 22. A sub-objective is a teaching segment in relation to which content is written. The content is stored in the resource repository 20. There is thus a logical link between each sub-objective and one or more resources. Each lesson 34 comprises one or more resources 20. Overall, a unit of work 36 is a logical group of lessons, teaching units 38 and sub-objectives 24 which together form a teaching program.

Overall, the embodiment provides a complete service to support a teacher through the whole teaching and learning cycle covering planning, delivery, assessing and evaluating. The embodiment can provide a complete default curriculum course that covers and ensures all the teaching objectives for a year are met. Included in the resource repository are planning notes, classroom management notes, lesson and teaching activity notes, student assessment activities, student notes and homework, as well as teacher lesson reviews to provide feedback. The system is flexible allowing a teacher to follow it or incorporate their own teaching material and resources into it by storing further data in the resource repository and matching these to objectives stored in the metadata store. As a multi-media system, resources can be utilised from video, word processor presentation software and other online resources.

The logical structure of data stored within the system will now be described in detail.

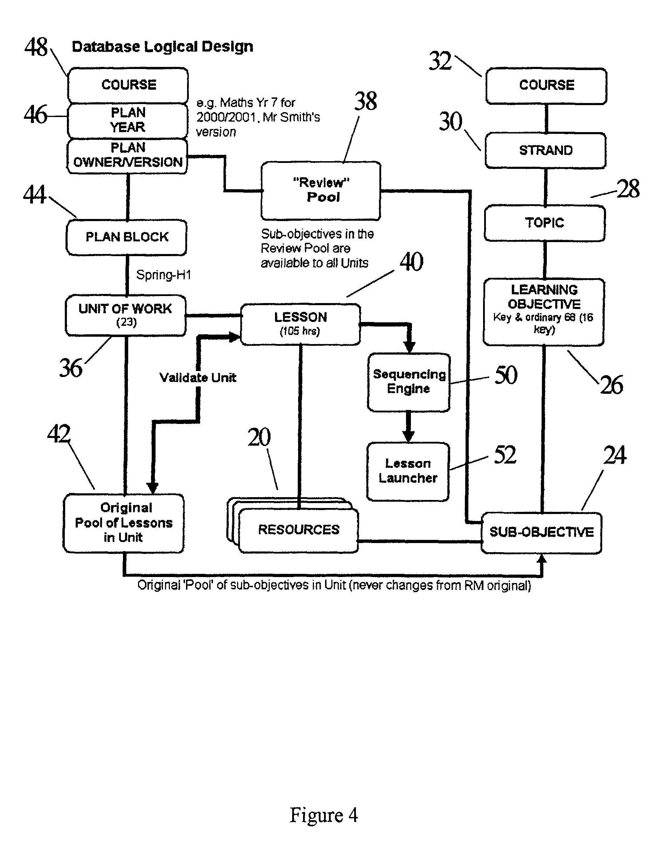

The overall logical design of the database is shown in Figure 4. The teaching resources themselves are stored in a resource repository 20. These can be a variety of different teaching materials, such as databases, spreadsheets, presentation packages, video, text and any other type of media for presentation and display on a screen in a classroom setting. The resource repository 20 can comprise a collection of different materials stored in different physical locations. For example, video and other such data could be stored locally, and HTML pages transmitted over the web.

The resources are logically linked to metadata in a metadata repository 22. The metadata repository comprises data describing sub-objectives 24, objectives 26, topic 28, strands 30 and a course 32, as already discussed. It is at the sub-objective 24 level that the metadata is linked to the resources 20. Thus, for each resource, one or more sub-objectives 24 are identified as being met by teaching using that resource. It should be noted at this point that the terms sub-objectives 24 and objective 26 refer to units of an overall curriculum. Objectives are specific learning points and sub-objectives are the constituent units of objectives for which content can be written. Other terms could be used to describe such units of data.

Lessons 40 comprise resources selected from the resource repository 20 and presented to pupils on a display by means of the sequencing engine 50 and lesson launcher 52. The lesson launcher 52 is the main component of the embodiment that handles the seamless launching of different media types. The structure of a lesson is stored as lesson data 40. A lesson can be pre-configured in the system, or configured by a teacher from available resources.

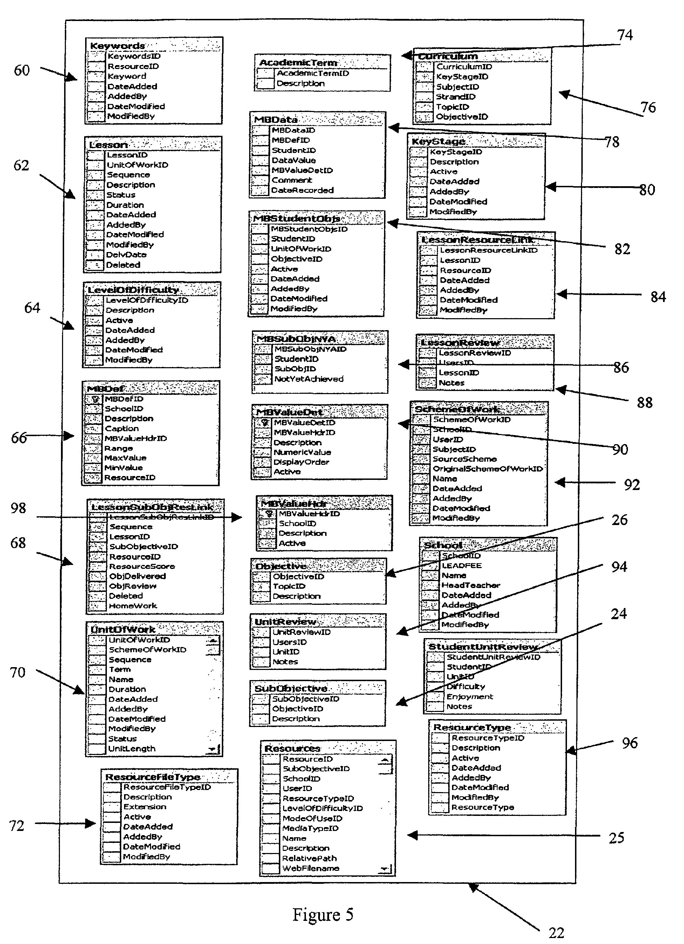

A more detailed view of the metadata repository 22 is shown in Figure 5. In general, the repository 22 comprises a number of store locations, with each store location comprising a number of fields for respective data. Not all of these fields will be described in detail as they relate to peripheral functions. The core metadata comprises sub-objectives 24 and objectives 26. Sub-objectives comprise a sub-objective ID, an objective ID of the parent objective and a description. The objective ID is used to link the sub-objective to the relevant objective and the description is available to users to view. Similarly, objectives include an objective ID, a topic ID and a description. Resources 25 include a resource ID and sub-objective ID of the sub-objectives to which the resource is logically linked. The resource ID allows the respective resource to be retrieved from the resource repository 20. Resource file type 72 and resource type 96 are used to identify the nature of the relevant resource.

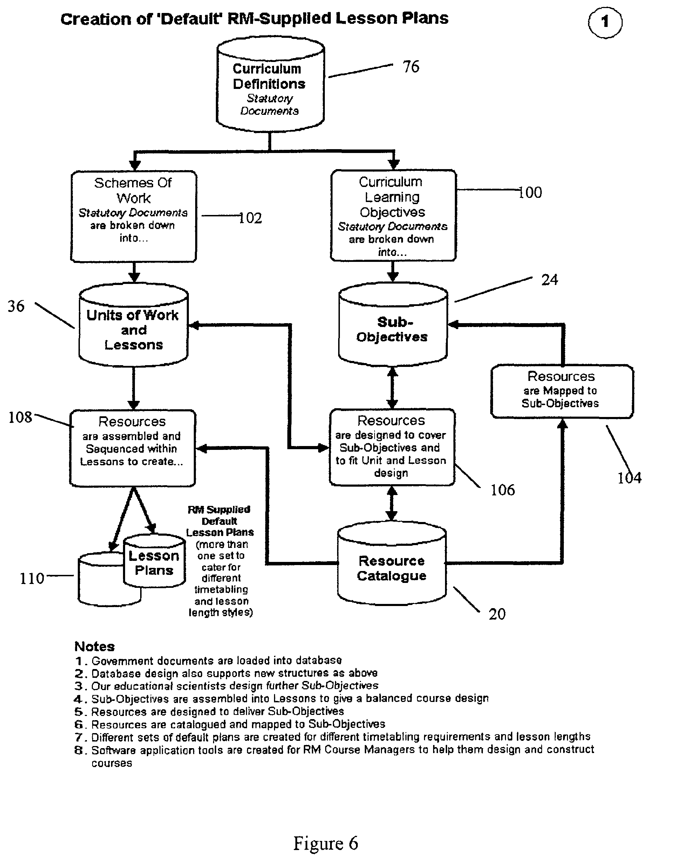

Various units of data are included to store information regarding the curriculum and students: Curriculum 76, KeyStage 78, AcademicTerm 74, MBStudentObjs 82, MBSubObjNYA 86, MBVALUEDet 90, SchemeOfWork 92 and MBValueHdr 98 are all administrative data for general purpose use. The information relating to lessons is stored as LessonUnit 62, LevelOfDifficulty 64, LessonSubObjResLink 68 and UnitOfWork 70. These contain fields that logically link the unit of work to a relevant lesson and the lesson itself to appropriate resources and the sequence in which they are to be presented. The creation of lesson plans and use of lesson plans is shown in Figure 6. The curriculum definitions data 76 is broken down at step 100 into sub-objective 24. Similarly, schemes of work 102 are broken down into units of work and lessons 36. Resources are designed at step 106 to cover the relevant sub-objectives and are stored in a repository 20. The resources are mapped onto the sub-objectives at step 104 by placing appropriate fields in the data stores shown in Figure 5. The resources are then assembled and sequenced using the sequence field in the lesson unit 62 at step 108 to store lesson plans 110. A set of lesson plans incorporating the resource materials and targeting specific sub-objectives are thereby created.

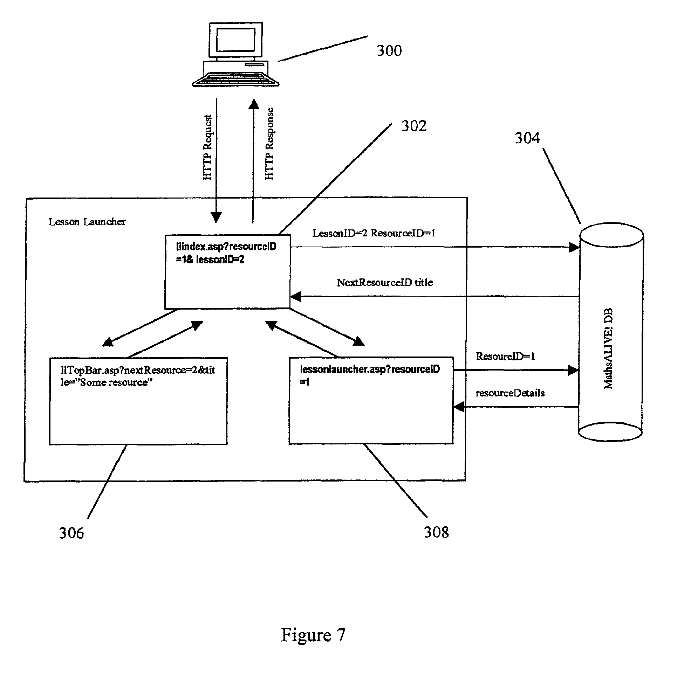

The seamless launching of media will now be described with reference to figure 7.

In short, the presentation system can present a variety of different media on a screen. This is achieved by embedding the data for each resource in an HTML page for presentation. This is apparently seamless to a viewer because the sequence of the media to be shown is stored in the lesson plan 40. Accordingly, the system automatically knows the media to be presented next and takes this from the resource repository 20.

When a student or teacher launches a resource from a lesson launcher screen the system can deliver a variety of media types. The method for launching these media types is flexible enough to allow the addition of new media types in the future while allowing the resource contributor to specify any runtime parameters or arguments that are required by the resource. These parameters/arguments are then entered into the HTML dynamically when a resource is launched.

The current media type that can be launched by the embodiment are:

| | |
|---|---|
| HTML Document | MIDI Audio File |
| HTML Document | MPEG Movie File |
| Text Document | AVI Movie File |
| Rich Text Document | MPEG Movie File |
| Word Document | ActiveX Control |
| Excel Document | PCX Image |
| QuickTime Movie | Adobe Acrobat Document |
| Application | Internet Shortcut |
| GIF Image | Shockwave File |
| Bitmap | Eastiteach Document |
| JPEG Image | MP3 Audio File |
| Icon | PowerPoint Presentation |
| JPEG Image | TI-73 Program |
| WAV Audio File | Device Independent Bitmap quiz |

All resources launched via the system website are handled using the lesson Launcher 52 (figure 4) groups of files, these consist of llindex.asp 302, lessonLauncher.asp 308, llTopBar.asp 306 and markup.inc. These files makeup a frameset that contains various functions to allow the mark-up of a variety of resources. A frameset has been used to allow some resources to be launched using the browser Mime type detection while keeping the resource within the framework of the system. The system can accommodate either locally stored or remote resources. For example, teachers or presenters, based on the user login, could launch resources locally, or a student could launch resources via the web. In the latter case, no files would need to be stored locally. In the embodiment described, all resources are launched locally for all roles apart from students (such as teachers or other presenters based on the user login) and must therefore reside on the user's machine in the correct directory path. If a student launches a resource it is launched via the web and therefore no files are required locally.

For a resource to be launched the page llindex.asp 302 must be called and passed the parameter of resourceID taken from the metadata repository 22 from the resources field 25 (figure 5). If the lessonID parameter is also passed then the launcher 52 will determine where the resource features in a particular lesson and calculate what the next resource is in the sequence. This is determined by querying the lesson 40 information in the database that has been populated using the lesson planner of the system. The user will then have the option to launch the next resource in the sequence by clicking on a right arrow at the top of the screen. If a lessonID is not passed then the resource is launched as a standalone resource.

When the lessonID sequence has been determined (if applicable) the resource is embedded into an HTML page. This is achieved by determining the type of resource to be launched and building a path to the resource file, all resource information is stored in the resources table and its associated sub tables. The resource type is stored in the metadata repository 22 in the resource type field 72. Various functions are then called which build a HTML page for that particular resource type and dynamically passes any associated attributes or arguments that were detailed when the resource was added to the system. This allows for a wide range of resources to be launched and makes the system easy to modify if any additional resource types are required in the future.

Details of the operation of each file is given below:
- lessonLauncher.asp 308 contains the logic that allows the launching of the file types detailed above. It queries various tables in the system database 22 to obtain the resource file type, path and filename. Depending on the type of resource the page will output the appropriate HTML to the client by calling a variety of functions passing it any required arguments/parameters (These functions are contained within markup.inc).
- LlTopBar.asp 306 draws the controls for the top toolbar which allow a user to navigate between resources and return to the lesson launcher window.
- llindex.asp 302 determines the position of a resource in a lesson and then passes the information to the topBar.asp page for display.

Markup.inc contains all the functions that allow for the dynamic inclusion of the resource types.

As a result, two areas are displayed on a screen: first, the particular data itself is shown in a window and second, a button bar is shown with a forward and back button. The user can thereby seamlessly moved from one display to another without knowing the nature of the underlying resource to be displayed.

## Claims

1. A presentation system comprising: a resource repository and a metadata repository, the metadata repository including data designating the type of each resource and the position of the resource in a predetermined sequence, the system further comprising a resource launcher configured to extract the resource type and position in the sequence, to present the selected resource on a screen and, on receipt of a simple user input, to select and display either the preceding or subsequent resource in the sequence.

2. A presentation system according to claim 1, wherein the resources in the resource repository are of a plurality of different file types, and the metadata repository includes data designating the file type of each resource, wherein the resource launcher is configured to display in a sequence each of the different files within a single window of a display.

3. A presentation system according to claim 6 or 7, wherein the single window of a display is an HTML page.

4. A presentation system according to any of claims 1 to 3, wherein the metadata repository includes parameters to be passed to the resource launcher describing how each resource should be displayed.

5. A presentation system according to any preceding claim wherein the resource repository contains teaching material, and the presentation system is a teaching system.

6. A method of delivering resources of a plurality of types to a display comprising: retrieving a resource from a resource repository, retrieving meta data from a metadata repository designating the type of each resource and the position of the resource in a predetermined sequence, extracting the resource type and position in the predetermined sequence, presenting the selected resource on a screen and, on receipt of a simple user input, selecting and displaying on the screen either the preceding or subsequent resource in the sequence.

7. A method according to claim 6,wherein the resources in the resource repository are of a plurality of different file types, and the metadata repository includes data designating the file type of each resource, comprising displaying in a sequence each of he different files within a single window of a display.

8. A method according to claim 6 or 7, wherein the single window of a display is an HTML page.

9. A method according to any of claims 6 to 9, wherein the metadata repository includes parameters describing how each resource, comprising extracting those parameters and displaying the resource according to those parameters.

10. A computer readable storage medium and having stored thereon computer code which when executed on a computer undertakes the steps of any of claims 6 to 9.
